# EUROPEAN PATENT APPLICATION

(11) **EP 1 958 968 A1**
(43) Date of publication of application: **20.08.2008**
(21) Application number: 06834002.5
(22) Date of filing: 05.12.2006
(51) Int. Cl.: C08F 2/44, B41N 1/12, C08F 2/50, C08F 255/02, C08F 279/02

(54) **ULTRAVIOLET-CURABLE POLYMER COMPOSITION, RESIN MOLDED ARTICLE AND METHOD FOR PRODUCING SAME**

(30) Priority: 09.12.2005 JP 2005356772
(71) Applicant: JSR Corporation, Tokyo 104-8410 (JP)
(72) Inventor: NAKAMURA, Takeo, Tokyo 104-8410 (JP); AOYAMA, Teruo, Tokyo 104-8410 (JP); MORIKAWA, Akihiko, Tokyo 104-8410 (JP)
(74) Representative: TBK-Patent
(86) International application number: PCT/JP2006/324247
(87) International publication number: WO 2007/066652

(57) **Abstract**

An ultraviolet-curable polymer composition includes (A) 5 to 100 parts by mass of syndiotactic 1, 2-polybutadiene having a 1,2-vinyl bond content of 70% or more and a degree of crystallinity of 5 to 50%, (B) 0 to 95 parts by mass of a thermoplastic polymer ((A)+(B) =100 parts by mass), (C) 10 parts by mass or less of a photoinitiator based on 100 parts by mass of the syndiotactic 1,2-polybutadiene (A) and the thermoplastic polymer (B) in total, and (D) 10 parts by mass or less of a polyfunctional acrylate based on 100 parts by mass of the syndiotactic 1,2-polybutadiene (A) and the thermoplastic polymer (B) in total.

## Description

### TECHNICAL FIELD

The present invention relates to an ultraviolet-curable polymer composition that can produce a resin molded article exhibiting flexibility, strength, laser engraving properties, and wear resistance suitable for various films, a flexographic printing plate, a sole, and the like, a resin molded article exhibiting excellent flexibility, strength, and wear resistance, and a method for producing the same.

### BACKGROUND ART

Syndiotactic 1,2-polybutadiene is a thermoplastic elastomer having properties of a plastic (hardness) and a rubber (elasticity and flexibility). Since syndiotactic 1,2-polybutadiene can be easily molded using a generally used polymer processing machine while maintaining a constant crystallinity, syndiotactic 1,2-polybutadiene has been used for various industrial products. In particular, since syndiotactic 1,2-polybutadiene exhibits excellent gas permeability and transparency, can be molded without adding a plasticizer, and exhibits flexibility and moderate self-adhesiveness, syndiotactic 1,2-polybutadiene has been increasingly applied to a surface-protective film, for example.

However, since a molded article (e.g., sheet) formed of syndiotactic 1,2-polybutadiene is easily damaged when scratched with a nail or the like, use of a molded article formed of syndiotactic 1,2-polybutadiene as an exterior material is limited. When it is necessary to use a molded article formed of syndiotactic 1,2-polybutadiene as an exterior material, the surface of the molded article must be coated. This increases cost and environmental impact.

As a method of improving the performance balance of syndiotactic 1,2-polybutadiene while maintaining the properties of a plastic (hardness) and a rubber (elasticity and flexibility), a method that causes only the surface of a molded article formed of syndiotactic 1,2-polybutadiene to be crosslinked and cured by irradiation of UV rays with a specific wavelength has been disclosed (see Patent Document 1, for example). A method that obtains a molded article with a harder surface by irradiation of electron beams has also been proposed.

A method that treats the surface of a molded article formed of specific 1,2-polybutadiene by irradiation of radioactive rays under specific conditions has been disclosed aimed at improving scratch resistance and vapor sterilization resistance while maintaining flexibility (see Patent Documents 2 and 3, for example).

However, a molded article obtained using the methods disclosed in Patent Documents 2 and 3 and the like does not necessarily exhibit sufficiently improved wear resistance. Therefore, further improvements are required in order to utilize a molded article formed of syndiotactic 1,2-polybutadiene as various molded articles (e.g., medical tube) for which excellent wear resistance is desired. In a traditional method of utilizing electron beams, since the inside of a molded article is also hardened, the flexibility which is one of properties of syndiotactic 1,2-polybutadiene is almost lost.

Patent Document 1: JP-A-2000-129017
Patent Document 2: JP-A-2002-60520
Patent Document 3: JP-A-2004-307843

### DISCLOSURE OF THE INVENTION

The present invention was conceived in view of the above-described problems of related art. An object of the present invention is to provide an ultraviolet-curable polymer composition that can produce a resin molded article exhibiting excellent flexibility, strength, and wear resistance, a resin molded article exhibiting excellent flexibility, strength, and wear resistance, a method for producing the same, and a flexographic printing plate that exhibits excellent flexibility, strength, and wear resistance, is easily produced with excellent engraving accuracy, rarely produces a sticky processed surface, and has a sufficient engraving depth.

As a result of extensive studies in order to achieve the above object, the inventors of the present invention found that the above object can be achieved by incorporating specific amounts of a photoinitiator and a polyfunctional acrylate in a polymer composition that contains a specific syndiotactic 1,2-polybutadiene. This finding has led to the completion of the present invention.

According to the present invention, an ultraviolet-curable polymer composition, a resin molded article, and a method for producing the same given below are provided.

[1] An ultraviolet-curable polymer composition comprising:
(A) 5 to 100 parts by mass of syndiotactic 1,2-polybutadiene having a 1,2-vinyl bond content of 70% or more and a degree of crystallinity of 5 to 50%, (B) 0 to 95 parts by mass of a thermoplastic polymer ((A) + (B) =100 parts by mass), (C) 10 parts by mass or less of a photoinitiator based on 100 parts by mass of the syndiotactic 1,2-polybutadiene (A) and the thermoplastic polymer (B) in total, (D) 10 parts by mass or less of a polyfunctional acrylate based on 100 parts by mass of the syndiotactic 1,2-polybutadiene (A) and the thermoplastic polymer (B) in total, (E) 0 to 200 parts by mass of an extender oil having a viscosity gravity constant (VGC value) of 0.790 to 0.999 based on 100 parts by mass of the syndiotactic 1,2-polybutadiene (A) and the thermoplastic polymer (B) in total, and (F) 0 to 50 parts by mass of silica particles based on 100 parts by mass of the syndiotactic 1,2-polybutadiene (A) and the thermoplastic polymer (B) in total.

[2] The ultraviolet-curable polymer composition according to [1], wherein the thermoplastic polymer (B) is at least one thermoplastic polymer selected from the group consisting of a styrene-butadiene copolymer, a hydrogenated styrene-butadiene copolymer, a styrene-isoprene copolymer, a hydrogenated styrene-isoprene copolymer, an ethylene-α-olefin copolymer, polyethylene, polypropylene, an ethylene-vinyl acetate copolymer, an ethylene-alkyl (meth)acrylate copolymer, polybutadiene (excluding the syndiotactic 1,2-polybutadiene (A)), and polyisoprene.

[3] The ultraviolet-curable polymer composition according to [1] or [2], wherein the photoinitiator (C) is at least one compound selected from the group consisting of benzophenone, benzyl methyl ketal, an α-hydroxyketone, an α-aminoketone, an oxime ester, and an acylphosphine oxide compound.

[4] The ultraviolet-curable polymer composition according to any one of [1] to [3], wherein the polyfunctional acrylate (D) is at least one compound selected from the group consisting of trimethylolpropane tri(meth)acrylate, trimethylolpropanetrioxyethyl (meth)acrylate, pentaerythritol tri(meth)acrylate, ethylene glycol di(meth)acrylate, and triethylene glycol diacrylate.

[5] The ultraviolet-curable polymer composition according to any one of [1] to [4], wherein the extender oil (E) is paraffinic extender oil and/or naphthenic extender oil.

[6] The ultraviolet-curable polymer composition according to any one of [1] to [5], wherein the silica particles (F) are anhydrous particles having an average primary particle diameter of 0.005 µm or more and less than 0.1 µm.

[7] A resin molded article obtained by irradiation of UV rays to the ultraviolet-curable polymer composition according to any one of [1] to [6].

[8] The resin molded article according to [7], wherein the surface of the resin molded article has a wear volume determined by a DIN wear test of 300cc or less.

[9] The resin molded article according to [7] or [8], the resin molded article being a film, a sheet, a tube, a hose, or a sole.

[10] A flexographic printing plate formed by engraving a specific printing pattern on a processing target surface of a laser processing sheet having at least one processing target surface, the laser processing sheet being obtained by irradiation of UV rays to a sheet-shaped molded article formed of the ultraviolet-curable polymer composition according to any one of [1] to [6].

[11] A method for producing a resin molded article comprising irradiation of UV rays to a molded article formed of the ultraviolet-curable polymer composition according to any one of [1] to [6] to obtain a resin molded article.

[12] The method for producing a resin molded article according to [11], wherein a cumulative UV irradiation dose is 100 mJ/cm² or more.

The ultraviolet-curable polymer composition according to the present invention can produce a resin molded article exhibiting excellent flexibility, strength, and wear resistance.

The resin molded article according to the present invention exhibits excellent flexibility, strength, and wear resistance.

The flexographic printing plate according to the present invention exhibits excellent flexibility, strength, and wear resistance, can be easily produced with excellent engraving accuracy, rarely produces a sticky processed surface, and has a sufficient engraving depth.

A resin molded article exhibiting excellent flexibility, strength, and wear resistance can be produced by the method for producing a resin molded article according to the present invention.

### BEST MODE FOR CARRYING OUT THE INVENTION

Preferred embodiments of the present invention are described below. Note that the present invention is not limited to the following embodiments. Various modifications, improvements, and the like may be made of the following embodiments based on knowledge of a person skilled in the art without departing from the scope of the present invention.

### 1. Ultraviolet-curable polymer composition

An ultraviolet-curable polymer composition according to one embodiment of the present in invention comprises (A) 5 to 100 parts by mass of syndiotactic 1,2-polybutadiene having a 1,2-vinyl bond content of 70% or more and a degree of crystallinity of 5 to 50% (hereinafter referred to as "component (A)"), (B) 0 to 95 parts by mass of a thermoplastic polymer (hereinafter referred to as "component (B)") ((A) + (B) =100 parts by mass), (C) 10 parts by mass or less of a photoinitiator (hereinafter referred to as "component (C) ") based on 100 parts by mass of the component (A) and the component (B) in total, (D) 10 parts by mass or less of a polyfunctional acrylate (hereinafter referred to as "component (D) ") based on 100 parts by mass of the component (A) and the component (B) in total, (E) 0 to 200 parts by mass of an extender oil having a viscosity gravity constant (VGC value) of 0.790 to 0.999 (hereinafter referred to as "component (E)") based on 100 parts by mass of the component (A) and the component (B) in total, and (F) 0 to 50 parts by mass of silica particles (hereinafter referred to as "component (F) ") based on 100 parts by mass of the component (A) and the component (B) in total. The details of the ultraviolet-curable polymer composition are described below.

### (A) Syndiotactic 1,2-polybutadiene

The component (A) of the ultraviolet-curable polymer composition according to this embodiment is syndiotactic 1,2-polybutadiene. The 1,2-vinyl bond content of the component (A) is 70% or more, preferably 80% or more, and more preferably 90% or more. If the 1,2-vinyl bond content of the component (A) is 70% or more, a resin molded article with excellent flexibility can be obtained by curing the ultraviolet-curable polymer composition by irradiation of UV rays. The term "1, 2-vinyl bond content" used herein refers to a value determined by infrared absorption spectrometry (Morello method).

The degree of crystallinity of the component (A) is 5 to 50%, and preferably 10 to 40%. If the degree of crystallinity of the component (A) is 5 to 50%, a resin molded article which exhibits mechanical strength (e.g., tensile strength and tear strength) and flexibility in a well-balanced manner can be obtained. The term "degree of crystallinity" used herein refers to a value obtained by converting the density determined by an underwater replacement method provided that the density of 1,2-polybutadiene with a degree of crystallinity of 0% is 0.889 g/cm³ and the density of 1,2-polybutadiene with a degree of crystallinity of 100% is 0.963 g/cm³.

The melting point (Tm) of the component (A) is preferably 50 to 150°C, and more preferably 60 to 140°C. If the melting point (Tm) of the component (A) is 50 to 150°C, a resin molded article which exhibits heat resistance, mechanical strength, and flexibility in a further well-balanced manner can be obtained.

The weight average molecular weight (Mw) of the component (A) is preferably 10,000 to 5,000,000, more preferably 10,000 to 1,500,000, and particularly more preferably 50,000 to 1,000,000. If the weight average molecular weight (Mw) of the component (A) is less than 10,000, processing may become difficult due to an increase in flowability. If the weight average molecular weight (Mw) of the component (A) is more than 5,000,000, processing may become difficult due to a decrease in flowability. The term "weight average molecular weight (Mw)" used herein refers to a polystyrene-reduced weight average molecular weight determined by gel permeation chromatography (GPC).

The component (A) may be a copolymer of the syndiotactic 1,2-polybutadiene and a small amount of conjugated diene other than butadiene. Examples of the conjugated diene other than butadiene include 1, 3-pentadiene, a 1,3-butadiene derivative replaced by a higher alkyl group, a 2-alkyl-substituted 1,3-butadiene, and the like. Specific examples of the 1,3-butadiene derivative replaced by a higher alkyl group include 1-pentyl-1,3-butadiene, 1-hexyl-1,3-butadiene, 1-heptyl-1,3-butadiene, 1-octyl-1,3-butadiene, and the like.

Specific examples of the 2-alkyl-substituted 1,3-butadiene include 2-methyl-1,3-butadiene (isoprene), 2-ethyl-1,3-butadiene, 2-propyl-1,3-butadiene, 2-isopropyl-1,3-butadiene, 2-butyl-1,3-butadiene, 2-isobutyl-1,3-butadiene, 2-amyl-1,3-butadiene, 2-isoamyl-1,3-butadiene, 2-hexyl-1,3-butadiene, 2-cyclohexyl-1,3-butadiene, 2-isohexyl-1,3-butadiene, 2-heptyl-1,3-butadiene, 2-isoheptyl-1,3-butadiene, 2-octyl-1,3-butadiene, 2-isooctyl-1,3-butadiene, and the like.

Among these conjugated dienes, isoprene and 1,3-pentadiene are preferable. The butadiene content of the monomer to be polymerized is preferably 50 mol% or more, and more preferably 70 mol% or more.

The component (A) may be obtained by polymerizing butadiene in the presence of a catalyst containing a cobalt compound and an aluminoxane, for example. As the cobalt compound, an organic acid salt formed by an organic acid having four or more carbon atoms and cobalt can be given. Specific examples of the organic acid salt include a butyrate, a hexanoate, a heptylate, an octylate such as a 2-ethylhexylate, a decanoate, a higher fatty acid salt such as stearic acid, oleic acid, and erucic acid, a benzoate, a tolylate, a xylylate, an alkyl-substituted, aralkyl-substituted, or allyl-substituted benzoate such as ethyl benzoate, a naphthoate, and an alkyl-substituted, aralkyl-substituted, or allyl-substituted naphthoate. Of these, an octylate such as 2-ethylhexylate, a stearate, and a benzoate are preferable due to excellent solubility in a hydrocarbon solvent.

Examples of the aluminoxane include aluminoxanes shown by the following formulas (1) and (2).

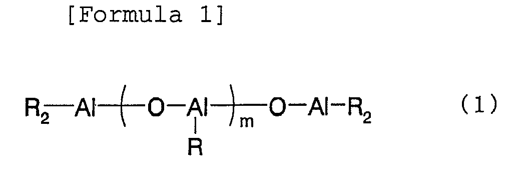

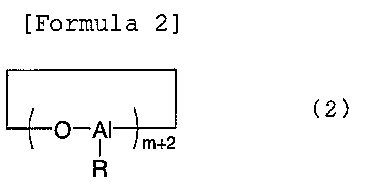

wherein R represents a hydrocarbon group such as a methyl group, an ethyl group, a propyl group, or a butyl group, preferably a methyl group or an ethyl group, and particularly preferably a methyl group. m represents an integer of 2 or more, preferably 5 or more, and more preferably from 10 to 100. Specific examples of the aluminoxane include methylaluminoxane, ethylaluminoxane, propylaluminoxane, butylaluminoxane, and the like. Of these, methylaluminoxane is preferable.

It is preferable that the polymerization catalyst include a phosphine compound in addition to the cobalt compound and the aluminoxane. A phosphine compound is effective for activating the polymerization catalyst and controlling the vinyl bond structure and the crystallinity. As the phosphine compound, an organic phosphorus compound shown by the following formula (3) is preferable.

P(Ar)ₙ(R')₃₋ₙ (3)

wherein R' represents a cycloalkyl group or an alkyl-substituted cycloalkyl group, n represents an integer from 0 to 3, and Ar represents a group shown by the following formula (4).

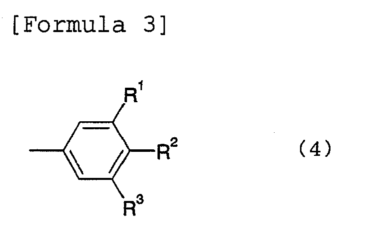

wherein R¹, R², and R³ individually represent a hydrogen atom, an alkyl group, a halogen atom, an alkoxy group, or an aryl group.

The alkyl group represented by R¹, R², and R³ is preferably an alkyl group having 1 to 6 carbon atoms. The alkoxy group represented by R¹, R², and R³ is preferably an alkoxy group having 1 to 6 carbon atoms. The aryl group represented by R¹, R², and R³ is preferably an aryl group having 6 to 12 carbon atoms.

Specific examples of the phosphine compound shown by the formula (3) include tris(3-methylphenyl)phosphine, tris(3-ethylphenyl)phosphine, tris(3,5-dimethylphenyl)phosphine, tris(3,4-dimethylphenyl)phosphine, tris(3-isopropylphenyl)phosphine, tris(3-t-butylphenyl)phosphine, tris(3,5-diethylphenyl)phosphine, tris(3-methyl-5-ethylphenyl)phosphine), tris(3-phenylphenyl)phosphine, tris(3,4,5-trimethylphenyl)phosphine, tris(4-methoxy-3,5-dimethylphenyl)phosphine, tris(4-ethoxy-3,5-diethylphenyl)phosphine, tris(4-butoxy-3,5-dibutylphenyl)phosphine, tris(p-methoxyphenylphosphine), tricyclohexylphosphine, dicyclohexylphenylphosphine, tribenzylphosphine, tri(4-methylphenylphosphine), tri(4-ethylphenylphosphine), and the like. In particular, triphenylphosphine, tris(3-methylphenyl)phosphine, tris(4-methoxy-3,5-dimethylphenyl)phosphine, and the like are preferable.

As the cobalt compound, a compound shown by the following formula (5) may be used.

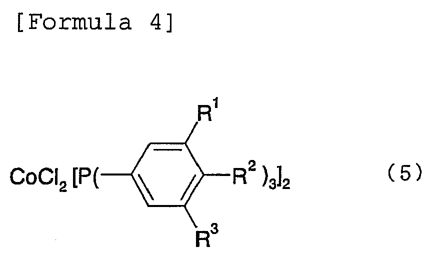

The compound shown by the formula (5) is a complex in which cobalt chloride has a phosphine compound shown by the formula (3) (n=3) as a ligand. The cobalt compound synthesized in advance may be used, or the cobalt compound may be synthesized in the polymerization system by causing cobalt chloride to come in contact with the phosphine compound. The 1,2- bond content and the degree of crystallinity of the resulting syndiotactic 1, 2-polybutadiene may be controlled by appropriately selecting the phosphine compound in the complex.

Specific examples of the cobalt compound shown by the formula (5) include cobalt bis(triphenylphosphine) dichloride, cobalt bis[tris(3-methylphenylphosphine)] dichloride, cobalt bis[tris(3-ethylphenylphosphine)] dichloride, cobalt bis[tris(4-methylphenylphosphine)] dichloride, cobalt bis[tris(3,5-dimethylphenylphosphine)] dichloride, cobalt bis[tris(3,4-dimethylphenylphosphine)] dichloride, cobalt bis[tris(3-isopropylphenylphosphine)] dichloride, cobalt bis[tris(3-t-butylphenylphosphine)] dichloride, cobalt bis[tris(3,5-diethylphenylphosphine)] dichloride, cobalt bis[tris(3-methyl-5-ethylphenylphosphine)] dichloride, cobalt bis[tris(3-phenylphenylphosphine)] dichloride, cobalt bis[tris(3,4,5-trimethylphenylphosphine)] dichloride, cobalt bis[tris(4-methoxy-3,5-dimethylphenylphosphine)] dichloride, cobalt bis[tris(4-ethoxy-3,5-diethylphenylphosphine)] dichloride, cobalt bis[tris(4-butoxy-3,5-dibutylphenylphosphine)] dichloride, cobalt bis[tris(4-methoxyphenylphosphine)] dichloride, cobalt bis[tris(3-methoxyphenylphosphine)] dichloride, cobalt bis[tris(4-dodecylphenylphosphine)] dichloride, cobalt bis[tris(4-ethylphenylphosphine)] dichloride, and the like.

Among these, cobalt bis(triphenylphosphine) dichloride, cobalt bis[tris(3-methylphenyl)phosphine] dichloride, cobalt bis[tris(3,5-dimethylphenyl)phosphine] dichloride, cobalt bis[tris(4-methoxy-3,5-dimethylphenyl)phosphine] dichloride, and the like are particularly preferable.

The cobalt compound is used as the catalyst in an amount of 0.001 to 1 mmol, and preferably 0.01 to 0.5 mmol, in terms of cobalt atoms, per mol of butadiene (in the case of homopolymerization) or per mol of butadiene and a conjugated diene other than butadiene (in the case of copolymerization) in total. The phosphine compound is used in such an amount that the ratio of phosphorus atoms to cobalt atoms (P/Co)) is normally 0.1 to 50, preferably 0.5 to 20, and more preferably 1 to 20. The aluminoxane is used such an amount that the ratio of aluminum atoms to cobalt atoms of the cobalt compound (Al/Co) is normally 4 to 10⁷, and preferably 10 to 10⁶. When using the complex compound shown by the formula (5), the phosphine compound is used in such an amount that the ratio of phosphorus atoms to cobalt atoms (P/Co) is two, and the aluminoxane is used in the above-mentioned amount.

Examples of the inert organic solvent used as a polymerization solvent include aromatic hydrocarbon solvents such as benzene, toluene, xylene, and cumene, aliphatic hydrocarbon solvents such as n-pentane, n-hexane, and n-butane, alicyclic hydrocarbon solvents such as cyclopentane, methylcyclopentane, and cyclohexane, and a mixture of these solvents.

The polymerization temperature is normally -50 to 120°C, and preferably -20 to 100°C. A polymerization reaction may be carried out either batchwise or continuously. The monomer concentration of the solvent is normally 5 to 50 mass%, and preferably 10 to 35 mass%. In order to prevent inactivation of the catalyst and the polymer, care must be taken to minimize inclusion of compounds (e.g., oxygen, water, or carbon dioxide gas) that inactivate the catalyst and the polymer in the polymerization system. When the polymerization reaction has proceeded to a desired stage, an alcohol, a polymerization terminator, an aging preventive, an antioxidant, a UV absorber, and the like are added to the reaction mixture, and the polymer produced is separated, washed, and dried according to a known method to obtain syndiotactic 1,2-polybutadiene.

### (B) Thermoplastic polymer

The component (B) of the ultraviolet-curable polymer composition according to this embodiment is a thermoplastic polymer. The component (B) is an optional component. The addition of the component (B) improves flexibility and light resistance.

Specific examples of the component (B) include a styrene-butadiene copolymer (SBS), a hydrogenated styrene-butadiene copolymer (SEBS), a styrene-isoprene copolymer (SIS), a hydrogenated styrene-isoprene copolymer (SEPS), an ethylene-α-olefin copolymer, polyethylene, polypropylene, an ethylene-vinyl acetate copolymer, an ethylene-alkyl (meth)acrylate copolymer, polybutadiene (excluding the syndiotactic 1,2-polybutadiene (A)), and polyisoprene. Among these, a styrene-butadiene copolymer and a styrene-isoprene copolymer are preferable. These thermoplastic polymers may be used either individually or in combination.

The molecular weight of the SBS is not particularly limited. The weight average molecular weight (Mw) of the SBS is preferably 10,000 to 5,000,000, and more preferably 10,000 to 1, 500, 000. Examples of commercially available products of the SBS include TR1600, TR2000, TR2003 (manufactured by JSR Corporation), Tufprene 125, Tufprene 126 (manufactured by Asahi Kasei Chemicals Corporation), and the like.

The molecular weight of the SEBS is not particularly limited. The weight average molecular weight (Mw) of the SEBS is preferably 10, 000 to 5, 000, 000, and more preferably 10, 000 to 1,500,000. Examples of commercially available products of the SEBS include DYNARON 8600 (Trade name) manufactured by JSR Corporation, G1657 (Trade name) manufactured by Kraton Polymers, and the like.

The molecular weight of the SIS is not particularly limited. The weight average molecular weight (Mw) of the SIS is preferably 10,000 to 5,000,000, and more preferably 10,000 to 1,500,000. Examples of commercially available products of the SIS include SIS5200P, SIS5229P (Trade names) manufactured by JSR Corporation, Quintac 3433 (Trade name) manufactured by Zeon Corporation, and the like.

The molecular weight of the SEPS is not particularly limited. The weight average molecular weight (Mw) of the SEPS is preferably 10,000 to 5,000,000, and more preferably 10,000 to 1,500,000. Examples of commercially available products of the SEPS include Septon S2063, S2004 (Trade names) manufactured by Kuraray Co., Ltd., and the like.

The ethylene-α-olefin copolymer is preferably an ethylene-propylene copolymer, an ethylene-1-butene copolymer, or an ethylene-octene copolymer. The molecular weight of the ethylene-α-olefin copolymer is not particularly limited. The weight average molecular weight of the ethylene-α-olefin copolymer is preferably 10,000 to 5,000,000, and more preferably 10,000 to 1,500,000. Examples of commercially available products of the ethylene-α-olefin copolymer include EP57P, EBM3041 (manufactured by JSR Corporation), Engage 8200 (manufactured by DuPont Performance Elastomers KK), and the like.

The polyethylene is preferably a low-density polyethylene (LDPE), a very-low-density polyethylene (VLDPE), an ultra-low-density polyethylene (ULDPE), or a linear low-density polyethylene (LLDPE). The molecular weight of the polyethylene is not particularly limited. The weight average molecular weight (Mw) of the polyethylene is preferably 10, 000 to 5,000,000, and more preferably 10,000 to 1,500,000. Examples of commercially available products of the polyethylene include Novatec YF30, UF340 (Trade names) manufactured by Japan Polyethylene Corporation, and the like.

The polypropylene is preferably a random polypropylene. The molecular weight of the polypropylene is not particularly limited. The weight average molecular weight (Mw) of the polypropylene is preferably 10,000 to 5,000,000, and more preferably 10,000 to 1,500,000. Examples of commercially available products of the polypropylene include Novatec BC8 (Trade name) manufactured by Japan Polypropylene Corporation, and the like.

The molecular weight of the ethylene-vinyl acetate copolymer is not particularly limited. The weight average molecular weight (Mw) of the ethylene-vinyl acetate copolymer is preferably 10,000 to 5,000,000, and more preferably 10,000 to 1, 500, 000. Examples of commercially available products of the ethylene-vinyl acetate copolymer include LV430, LV670 (Trade names) manufactured by Japan Polyethylene Corporation, and the like.

The ethylene-alkyl (meth)acrylate copolymer is preferably an ethylene-methyl acrylate copolymer, an ethylene-ethyl acrylate copolymer, or an ethylene-methyl methacrylate copolymer. The molecular weight of the ethylene-alkyl (meth)acrylate copolymer is not particularly limited. The weight average molecular weight of the ethylene-alkyl (meth)acrylate copolymer is preferably 10,000 to 5,000,000, and more preferably 10,000 to 1,500,000. Examples of commercially available products of the ethylene-alkyl (meth) acrylate copolymer include Lotryl 20MA08, Evaflex A704, A709 manufactured by Arkema Inc., and the like.

The component (A) and the component (B) must be contained in the polymer component used to obtain a resin molded article according to this embodiment in amounts of 5 to 100 parts by mass and 0 to 95 parts by mass, respectively, based on 100 parts by mass of the component (A) and the component (B) in total. The amounts of the component (A) and the component (B) are preferably 10 to 90 parts by mass and 10 to 90 parts by mass, and more preferably 30 to 70 parts by mass and 30 to 70 parts by mass, respectively. If the amount of the component (A) is less than 5 parts by mass, a crosslinking reaction may not occur sufficiently when irradiating with UV rays.

### (C) Photoinitiator

The component (C) of the ultraviolet-curable polymer composition according to this embodiment is a photoinitiator. The component (C) is not particularly limited. Specific examples of the component (C) include benzophenone, benzyl dimethyl ketal, an α-hydroxyketone, an α-aminoketone, an oxime ester, and an acylphosphine oxide compound. Among these, an α-hydroxyketone, an α-aminoketone, and an acylphosphine oxide compound are preferable. These photoinitiators may be used either individually or in combination.

Examples of the α-hydroxyketone include 1-hydroxycyclohexyl phenyl ketone, 2-hydroxy-2-methyl-1-phenylpropan-1-one, and the like. Examples of the α-aminoketone include 2-methyl-1-[4-(methylthio)phenyl]-2-morpholinopropan-1-one, 2-benzyl-2-dimethylamino-1-(4-morpholinophenyl)-butanone-1, and the like.

Examples of the oxime ester include 1,2-octanedione, 1-[4-(phenylthio)-2-(0-benzoyloxime)], and the like. Examples of the acylphosphine oxide compound include 2,4,6-trimethylbenzoyldiphenylphosphine oxide, bis(2,4,6-trimethylbenzoyl)-phenylphosphine oxide, and the like.

The component (C) is used in an amount of 10 parts by mass or less, preferably 0.1 to 10 parts by mass, and more preferably 0.1 to 7 parts by mass, based on 100 parts by mass of the component (A) and the component (B) in total. If the amount of the component (C) is more than 10 parts by mass based on 100 parts by mass of the component (A) and the component (B) in total, surface bleeding may occur. If the amount of the component (C) is less than 0.1 parts by mass based on 100 parts by mass of the component (A) and the component (B) in total, a sufficient photo-crosslinking promoting effect may not be obtained, whereby wear resistance may not be sufficiently improved.

### (D) Polyfunctional acrylate

The component (D) of the ultraviolet-curable polymer composition according to this embodiment is a polyfunctional acrylate. The term "polyfunctional" used herein means that the acrylate has two or more polymerizable functional groups in one molecule. A resin molded article with excellent wear resistance can be obtained by curing the ultraviolet-curable polymer composition by irradiation of UV rays by adding the component (D) to the ultraviolet-curable polymer composition.

The component (D) is not particularly limited. Specific examples of the component (D) include trimethylolpropane tri(meth)acrylate, trimethylolpropanetrioxyethyl (meth)acrylate, pentaerythritol tri(meth)acrylate, ethylene glycol di(meth)acrylate, triethylene glycol diacrylate, tetraethylene glycol di(meth)acrylate, tricyclodecanediyldimethanol di(meth)acrylate, polyethylene glycol di(meth)acrylate, 1,4-butanediol di(meth)acrylate, 1,6-hexanediol di(meth)acrylate, neopentyl glycol di(meth)acrylate, tripropylene glycol di(meth)acrylate, neopentyl glycol di (meth) acrylate, and the like. Among these, trimethylolpropane tri(meth)acrylate, trimethylolpropanetrioxyethyl (meth)acrylate, pentaerythritol tri(meth)acrylate, ethylene glycol di(meth)acrylate, and triethylene glycol diacrylate are preferable. These polyfunctional (meth) acrylates may be used either individually or in combination.

The component (D) is used in an amount of 10 parts by mass or less, preferably 0.1 to 7 parts by mass, and more preferably 0.1 to 4 parts by mass, based on 100 parts by mass of the component (A) and the component (B) in total. If the amount of the component (D) is more than 10 parts by mass based on 100 parts by mass of the component (A) and the component (B) in total, surface bleeding may occur. If the amount of the component (D) is less than 0.1 parts by mass based on 100 parts by mass of the component (A) and the component (B) in total, a sufficient photo-crosslinking promoting effect may not be obtained, whereby wear resistance may not be sufficiently improved.

### (E) Extender oil

The component (E) of the ultraviolet-curable polymer composition according to this embodiment is an extender oil having a viscosity gravity constant (hereinafter referred to as "V.G.C." ) of 0.790 to 0.999, preferably 0.790 to 0.949, and more preferably 0.790 to 0.912. Specific examples of the component (E) include an aromatic extender oil, a naphthenic extender oil, a paraffinic extender oil, and the like.

Specific examples of the aromatic extender oil having a V.G.C. within the above range include Diana Process Oil AC-12, AC460, AH-16, AH-58 (Trade name) manufactured by Idemitsu Kosan Co., Ltd.; Mobilsol K, Mobilsol 22, Mobilsol 130 (Trade names) manufactured by ExxonMobil Corporation; Kyoseki Process X50, X100, X140 (Trade names) manufactured by Nikko Kyodo Co., Ltd.; Rezox No. 3, Dutorex 729UK (Trade names) manufactured by Shell Chemicals; Komorex 200, 300, 500, 700 (Trade names) manufactured by Nippon Oil Corporation; Esso Process Oil 110, 120 (Trade names) manufactured by ExxonMobil Corporation; Mitsubishi 34 Heavy Process Oil, Mitsubishi 44 Heavy Process Oil, Mitsubishi 38 Heavy Process Oil, Mitsubishi 39 Heavy Process Oil (Trade names) manufactured by Mitsubishi Oil Co., Ltd.; and the like.

Specific examples of the naphthenic extender oil having a V.G.C. within the above range include Diana Process Oil NS-24, NS-100, NM-26, NM-280, NP-2 (Trade names) manufactured by Idemitsu Kosan Co., Ltd.; Naprex 38 (Trade name) manufactured by ExxonMobil Corporation; Fukkol FLEX #1060N, #1150N, #1400N, #2040N, #2050N (Trade names) manufactured by Fuji Kosan Co., Ltd.; Kyoseki Process R25, R50, R200, R1000 (Trade names) manufactured by Nikko Kyodo Co., Ltd.; Shellflex 371JY, 371N, 451, N-40, 22, 22R, 32R, 100R, 100S, 100SA, 220RS, 220S, 260, 320R, 680 (Trade names) manufactured by Shell Chemicals; Komorex No. 2 Process Oil (Trade name) manufactured by Nippon Oil Corporation; Esso Process Oil L-2, 765 (Trade names) manufactured by ExxonMobil Corporation; Mitsubishi 20 Light Process Oil (Trade names) manufactured by Mitsubishi Oil Co., Ltd.); and the like.

Specific examples of the paraffinic extender oil having a V.G.C. within the above range include Diana Process Oil PW-90, PW-380, PS-32, PS-90, PS-430 (Trade names) manufactured by Idemitsu Kosan Co., Ltd.; Fukkol Process P-100, P-200, P-300, P400, P-500 (Trade names) manufactured by Fuji Kosan Co., Ltd.; Kyoseki Process P-200, P-300, P-500, Kyoseki EPT 750, 1000, Kyoseki Process S90 (Trade names) manufactured by Nikko Kyodo Co., Ltd.; Luberex 26, 100, 460 (Trade names) manufactured by Shell Chemicals; Esso Process Oil 815, 845, B-1, Naprex 32 (Trade names) manufactured by ExxonMobil Corporation; Mitsubishi 10 Light Process Oil (Trade name) manufactured by Mitsubishi Oil Co., Ltd.; and the like.

The component (E) is used in an amount of 200 parts by mass or less, preferably 150 parts by mass or less, and more preferably 100 parts by mass or less, based on 100 parts by mass of the component (A) and the component (B) in total. If the amount of the component (E) is more than 200 parts by mass based on 100 parts by mass of the component (A) and the component (B) in total, wear resistance and processability are impaired. The amount of the component (E) is preferably 5 parts by mass or more based on 100 parts by mass of the component (A) and the component (B) in total, in order to suppress surface stickiness and provide a flexographic printing plate having a sufficient engraving depth.

### (F) Silica particles

The component (F) of the ultraviolet-curable polymer composition according to this embodiment is silica particles. As specific examples of the silica particles, various silica particles are known. It is preferable to use anhydrous silica particles from the viewpoint of improving wear resistance and suppressing stickiness on the surface subjected to laser processing. The average primary particle diameter of the anhydrous silica particles is preferably 0.005 µm or more and less than 0.1 µm, more preferably 0.01 µm or more and less than 0.1 µm, and particularly preferably 0.01 to 0.05 µm. If the average primary particle diameter of the silica particles is 0.1 µm or more, laser processability and washing performance after laser processing may deteriorate. On the other hand, it is difficult to obtain silica particles having an average primary particle diameter of less than 0.005 µm. As specific examples of the silica particles suitably contained in the laser processing composition according to this embodiment include Aerosil (Trade name) manufactured by Degussa AG and the like. The silica particles may be used either individually or in combination.

The component (F) is used in an amount of 50 parts by mass or less, preferably 10 to 40 parts by mass, and more preferably 20 to 40 parts by mass, based on 100 parts by mass of the component (A) and the component (B) in total. If the amount of the component (F) is more than 50 parts by mass based on 100 parts by mass of the component (A) and the component (B) in total, flexibility and processability are impaired.

### Other components

The polymer component used to obtain a resin molded article according to this embodiment may contain additives such as a pigment, a dye, an anti-aging agent, a UV absorber, a light stabilizer, a lubricant, a filler other than the anhydrous silica particles, an oil other than the extender oil having a V.G.C. of 0.790 to 0.999, a plasticizer, a liquid rubber, and a foaming agent in addition to the component (A) and the component (B). Specific examples of the additives include an anti-aging agent such as a phenol series anti-aging agent, a phosphite series anti-aging agent, and a thioether series anti-aging agent, a UV absorber such as a benzotriazole series UV absorber and a hydroxyphenyltriazine series UV absorber, a light stabilizer such as a hindered amine series light stabilizer, a lubricant such as an erucic amide, an octadecanamide, and an oleic amide, a filler such as talc, silica, magnesium hydroxide, calcium carbonate, glass, carbon fibers, and glass balloons, a foaming agent such as paraffin oil, silicone oil, an Expancel foaming agent (bead foaming agent "Microsphere" manufactured by Japan Fillite Co., Ltd.), azodicarbonamide (ADCA), p,p'-oxybisbenzenesulfonylhydrazine (OBSH), sodium bicarbonate, and azobisisobutyronitrile (AIBN).

### Molding method

A molded article (pre-irradiation molded article) used to produce a resin molded article can be obtained by mixing the above-mentioned components, causing the mixture to soften by heating, and kneading and molding the resulting product. Kneading and molding are preferably carried out at a temperature equal to or higher than the softening point or the melting point of the component (A), at which excellent moldability is obtained, since a uniform molded article can be obtained. Therefore, the molding temperature is preferably set at 90 to 170°C.

The method of molding the molded article is not particularly limited. For example, the above-mentioned components are mixed, kneaded, and molded into a molded article with a desired shape by press molding, extrusion molding, injection molding, blow molding, profile extrusion molding, T-die film molding, inflation molding, powder slash molding, rotational molding, calendering, or the like. Alternatively, the above-mentioned components may be dissolved in a solvent, applied to a substrate or a mold release material, and molded in the shape of a film or a sheet.

### 2. Resin molded article and method for producing the same

A resin molded article according to one embodiment of the present invention is described below. The resin molded article according to this embodiment is obtained by irradiation of UV rays to a molded article formed of the above-described ultraviolet-curable polymer composition, and exhibits excellent flexibility, strength, laser engraving properties, and wear resistance. The details of the resin molded article are described below.

### Irradiation of UV rays

The resin molded article according to this embodiment is produced by irradiation of UV rays to the molded article (pre-irradiation molded article). Since the syndiotactic 1, 2-polybutadiene that forms the molded article is crosslinked through the 1,2-vinyl bond by irradiation of UV rays to the molded article, the resin molded article according to this embodiment exhibits excellent wear resistance.

The wavelength of the irradiated UV rays is preferably 100 to 500 nm. The cumulative UV irradiation dose is preferably 100 mJ/cm² or more, more preferably 500 to 50,000 mJ/cm², and particularly 1000 to 10,000 mJ/cm². If the cumulative UV irradiation dose is less than 100 mJ/cm², a crosslinking reaction may not occur sufficiently, whereby wear resistance may not be improved sufficiently.

The resin molded article according to this embodiment thus produced exhibits excellent wear resistance. The wear volume of the resin molded article measured by a DIN wear test is preferably 300 cc or less, more preferably 250 cc or less, and particularly preferably 150 cc or less. The term "wear volume" used herein refers to a property value measured by the "DIN wear test" (JIS K 6264).

### 3. Flexographic printing plate

A flexographic printing plate according to one embodiment of the present invention is described below. The flexographic printing plate according to this embodiment is formed by engraving a specific printing pattern on a processing target surface of a laser processing sheet having at least one processing target surface. The laser processing sheet is obtained by irradiation of UV rays to a sheet-shaped molded article formed of the above-described ultraviolet-curable polymer composition.

The laser processing sheet used to form the flexographic printing plate according to this embodiment is a molded article obtained by irradiation of UV rays to a sheet-shaped molded article formed of the above-described ultraviolet-curable polymer composition according to the embodiment of the present invention. Therefore, the laser processing sheet exhibits excellent flexibility, engraving properties, and wear resistance. The flexographic printing plate according to this embodiment obtained by laser-processing the laser processing sheet exhibits excellent flexibility, engraving properties, and wear resistance, can be easily produced with excellent engraving accuracy, rarely produces a sticky processed surface, and has a sufficient engraving depth.

The laser processing sheet may be produced by molding the laser processing composition by extrusion molding, calendering, press molding, or the like. When producing the laser processing sheet by extrusion molding, it is preferable to use an EB crosslinking process or a UV crosslinking process from the viewpoint of production efficiency since the molded article can be crosslinked during extrusion.

It is preferable that a sheet-shaped base layer be stacked on one side of the laser processing sheet. The printing pressure required when printing using the flexographic printing plate can be reduced by forming such a laminate. Moreover, since the weight of the entire laser processing sheet can be reduced, a relatively large sheet (flexographic printing plate) can be advantageously produced. Examples of the material for the base layer include an elastomer given below, a material formed by curing a photopolymerizable composition containing such an elastomer, a compound having an ethylenically unsaturated group, and a photoinitiator, and the like.

The elastomer is not particularly limited. Examples of the elastomer include a rubber such as natural rubber, butadiene rubber, styrene-butadiene rubber, isoprene rubber, acrylonitrile-butadiene rubber, acrylic rubber, butyl rubber, fluororubber, silicone rubber, and urethane rubber, a thermoplastic elastomer, and the like. Among these, a thermoplastic elastomer is preferably used. Examples of the thermoplastic elastomer include a polyolefin thermoplastic elastomer, a styrene thermoplastic elastomer, a diene thermoplastic elastomer, a urethane thermoplastic elastomer, a polyester thermoplastic elastomer, a polyamide thermoplastic elastomer, a vinyl chloride thermoplastic elastomer, and a fluorine-containing thermoplastic elastomer.

Examples of the polyolefin thermoplastic elastomer (TPO) include a simply-blended TPO, an implanted TPO, a dynamically vulcanized TPO, and the like. Examples of the styrene thermoplastic elastomer include a styrene-butadiene block copolymer, a styrene-butadiene-styrene block copolymer, a styrene-(styrene-butadiene)-styrene block copolymer, a styrene-isoprene-styrene block copolymer, a styrene-(ethylene-butylene)-styrene block copolymer, a styrene-(ethylene-propylene)-styrene block copolymer, a hydrogenated polymer of a random styrene-butadiene rubber, a block copolymer of an aromatic vinyl compound and a conjugated diolefin (e.g., the above-mentioned block copolymer in which some or all of the styrenes are replaced by α-methylene), hydrogenated products of these block copolymers, and the like.

Examples of the diene thermoplastic elastomer include syndiotactic 1,2-polybutadiene, trans-1,4-polyisoprene, and the like. Examples of the polyester thermoplastic elastomer include a multiblock polymer formed using polybuthylene terephthalate as a hard segment and polytetramethylene ether glycol as a soft segment, and the like. Examples of the polyamide thermoplastic elastomer include a multiblock polymer formed using a nylon as a hard segment and a polyester or a polyol as a soft segment, and the like.

As the thermoplastic elastomer, a styrene-butadiene-styrene block copolymer, a styrene-isoprene-styrene block copolymer, a styrene-ethylene-butylene-styrene block copolymer, a styrene-ethylene-propylene-styrene block copolymer, a hydrogenated polymer of a random styrene-butadiene rubber, or the like may be suitably used taking into account the characteristic balance (e.g., material hardness and impact resilience) and processability. These thermoplastic elastomers may be used either individually or in combination.

The compound having an ethylenically unsaturated group is not particularly limited insofar as the compound is miscible with a binder polymer when mixed with the elastomer to such an extent that a transparent photopolymerized layer without cloudiness is formed. Specific examples of the compound having an ethylenically unsaturated group include (1) an alkyl (meth)acrylate such as methyl (meth)acrylate, ethyl (meth)acrylate, n-butyl (meth)acrylate, isobutyl (meth)acrylate, t-butyl (meth)acrylate, n-hexyl (meth)acrylate, 2-ethylhexyl (meth)acrylate, lauryl (meth)acrylate, and dicyclopentenyl (meth)acrylate; (2) an ether (meth)acrylate such as 2-methoxyethyl (meth)acrylate, 2-ethoxyethyl (meth)acrylate, 3 methoxybutyl (meth)acrylate, ethylcarbitol (meth)acrylate, phenoxyethyl (meth)acrylate, methoxy propylene glycol (meth)acrylate, n-butoxyethyl (meth)acrylate, methoxy triethylene glycol (meth)acrylate, and glycidyl (meth) acrylate; (3) an alcohol (meth) acrylate such as 2-hydroxyethyl (meth)acrylate, 2-hydroxypropyl (meth)acrylate, 2-hydroxybutyl (meth)acrylate, 4-hydroxybutyl (meth)acrylate, 2-(meth)acryloyloxyethyl-2-hydroxypropyl phthalate, and 2-hydroxy-3-phenoxypropyl acrylate; (4) a carboxylic acid (meth) acrylate such as 2- (meth) acryloyloxyethylsuccinic acid, 2-methacryloyloxyethylhexahydrophthalic acid, ω-carboxy-polycaprolactone mono (meth) acrylate, and an acrylic acid dimer; (5) a bifunctional acrylate such as 1, 4-butanediol di(meth)acrylate, 1,3-butylene glycol di(meth)acrylate, 1,6-hexanediol di(meth)acrylate, 1,9-nonanediol di (meth) acrylate, neopentyl glycol di (meth) acrylate, ethylene glycol di (meth) acrylate, triethylene glycol di (meth) acrylate, polyethylene glycol di(meth)acrylate, tripropylene glycol di(meth)acrylate, polypropylene glycol di(meth)acrylate, tetraethylene glycol di(meth)acrylate, 1,4-cyclohexanedimethanol di(meth)acrylate, bisphenol A, EO-addition di(methacrylate), bisphenol F, and EO-addition di(methacrylate); (6) a polyfunctional acrylate such as trimethylolpropane tri(meth)acrylate, pentaerythritol tri(meth)acrylate, trimethylolpropane EO-modified tri(meth)acrylate, trimethylolpropane PO-modified tri(meth)acrylate, pentaerythritol tetra(meth)acrylate, and dipentaerythritol hexa(meth)acrylate; a polybutadiene oligomer having an ethylenically unsaturated group, a urethane acrylate polymer, and the like.

The compound having an ethylenically unsaturated group is preferably used in an amount of 3 parts by mass or more based on 100 parts by mass of the elastomer. If the amount of the compound having an ethylenically unsaturated group is less than 3 parts by mass, it may be difficult to obtain sufficient mechanical strength and elasticity.

As the photoinitiator, a known photoinitiator may be used. For example, benzophenone, Michler's ketone, 4,4'-bis(dimethylamino)benzophenone, 4,4'-bis(diethylamino)benzophenone, 4-acryloxy-4'-dimethylaminobenzophenone, 4-acryloxy-4'-diethylaminobenzophenone, 2,2-dimethoxy-1,2-diphenylethan-1-one(2-phenyl-2,2-dimethox yacetophenone), 2,2-diethoxy-1,2-diphenylethan-1-one, 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1 -one, 2-methyl-1[4-(methylthio)phenyl]-2-morpholinopropan-1-one, 2-benzyl-2-dimethylamino-1-(4-morpholinophenyl)-butanone-l, bis(2,6-dimethoxybenzoyl)-2,4,4-trimethylpentylphosphine oxide, or the like may be used as the photoinitiator.

The photopolymerizable composition may optionally contain a small amount of a thermal addition polymerization inhibitor, a coloring agent, an antioxidant, a plasticizer, and the like. Specific examples of the thermal addition polymerization inhibitor include a hydroxyaromatic compound such as hydroquinone, an alkylhydroquinone, an alkoxyhydroquinone, allylhydroquinone, p-methoxyphenol, t-butylpyrocatechol, pyrogallol, beta-naphtol, and 2,6-di-t-butyl p-cresol; a quinone such as benzoquinone, 2,5-diphenyl-p-quinone; p-toluquinone, and p-xyloquinone; a nitro or nitroso compound such as nitrobenzene, m-dinitrobenzene, 2-methyl-2-nitrosopropane, α-phenyl-t-butylnitrone, and 5,5-dimethyl-1-pyrroline-1 oxide; an amine such as chloranil-amine series, diphenylamine, diphenylpicrylhydrazine, phenol-α-naphthylamine, pyridine, and phenothiazine; a sulfide such as dithiobenzoyl sulfide and dibenzyl tetrasulfide; an unsaturated compound such as 1,1-diphenylethylene and α-methylthioacrylonitrile; a thiazine dye such as thionin blue, toluidine blue, and methylene blue; a stable radical such as 1,1-diphenyl-2-picrylhydrazine, 1,3,5-triphenylfeldazine, 4-hydroxy-2,2,6,6-tetramethylpiperidin-1-oxyl, and 2,6-di-t-butyl-α-(3,5-di-t-butyl)-4-oxo-2,5-cyclohexadien-1-ylidene-p-trioxyl; and the like.

The thermal addition polymerization inhibitor is used in an amount of 0.01 to 5 mass% based on the amount of the photopolymerizable composition. These thermal addition polymerization inhibitors may be used individually or in combination.

Examples of the coloring agent include a basic dye such as Victoria Pure Blue, Victoria Blue, Methyl Violet, Eisen Malachite Green (manufactured by Hodogaya Chemical Co., Ltd.), Patent Pure Blue VX, Rhodamine B, and Methylene Blue (manufactured by Sumitomo Chemical Co., Ltd.), an oil-soluble dye such as Sudan Blue II, Victoria Blue F4R (manufactured by BASF), Oil Blue #603, Oil Blue BOS, and Oil Blue IIN (manufactured by Orient Chemical Industries, Ltd.), and an organic dye such as benzidine yellow G, brilliant carmin 6B, permanent F-5R, lake red C, and phthalocyanine green. An inorganic dye such as titanium oxide, zinc oxide, lithopone, white lead, lead yellow, cadmium yellow, barium yellow, cadmium red, molybdate orange, red lead (minium), umber, ultramarine, iron blue, cobalt ultramarine, chromic oxide green, or cobalt purple may also be used. These coloring agents may be used individually or in combination.

Examples of the antioxidant include 2,6-di-t-butyl-p-cresol, 2,2-methylene-bis(4-methyl-6-t-butylphenol), pentaerythrityl tetrakis[3-(3,5-di-t-butyl-4-hydroxyphenyl)propionate], 2,4-bis[(octylthio)methyl]-o-cresol, tris(3,5-di-t-butyl-4-hydroxybenzyl)-isocyanurate, and the like.

Examples of the plasticizer include aromatic, naphthenic, and paraffinic process oils, a dialkyl phthalate such as dibutyl phthalate, dihexyl phthalate, di-2-ethylhexyl phthalate, diheptyl phthalate, dioctyl phthalate, and dinonyl phthalate, a dialkyl adipate such as di-2-ethylhexyl adipate, dioctyl adipate, and di-isodecyl adipate, and the like.

The thickness of the laser processing sheet is preferably 0.5 to 7 mm, and more preferably 1 to 3 mm. If the thickness of the laser processing sheet is less than 0.5 mm, a laser beam tends to pass through the laser processing sheet depending on the intensity of the irradiated laser beam If the thickness of the laser processing sheet is more than 7 mm, handling may become difficult. Moreover, UV or EB crosslinking properties may decrease. When the thickness of the entire laser processing sheet is more than 3 mm, it is preferable to provide a hard resin base layer while forming the layer (laser processing layer) formed by molding the laser processing composition in the shape of a sheet to have a thickness of 3 mm or less.

A method for producing a flexographic printing plate according to one embodiment of the present invention is described below. The flexographic printing plate according to this embodiment may be formed by engraving a pattern on the processing target surface of the above-mentioned laser processing sheet by irradiation of laser beam. A laser oscillation device used for laser engraving may be a carbon dioxide laser. The laser intensity varies depending on the thickness of the laser processing sheet used and the desired engraving depth. The laser intensity is preferably 10 to 500 W, and more preferably 10 to 300 W per light source. If the laser intensity is less than 10 W, it may be difficult to obtain a printing pattern with a sufficient engraving depth. If the laser intensity is more than 500 W, the engraving accuracy may decrease due to the high intensity. In order to increase the laser processing rate, it is preferable to simultaneously process a number of points by increasing the number of light sources instead of increasing the intensity of one light source.

A laser engraving process may be performed in a state in which the laser processing sheet is disposed flatly. Note that the laser engraving process may be performed in a state in which the laser processing sheet is disposed on a roll made of a metal or the like. After the laser engraving process, it is preferable to wash the processing target surface to remove ash (residue) produced. The processing target surface may be washed using water or an appropriate organic solvent, or may be cleaned by spraying an air stream.

### EXAMPLES

The present invention is described in detail below by way of examples. Note that the present invention is not limited to the following examples. In the examples, "part" refers to "part by mass" and "%" refers to "mass%" unless otherwise indicated. The property values were measured by the following methods.

[Hardness (durometer A)]: It was measured in accordance with ASTM D-2240.

[100% stress]: It was measured in accordance with JIS K 6251.

[breaking strength and the elongation at break] : They were measured in accordance with JIS K 6251.

[DIN wear test] : It was conducted in accordance with JIS K 6264.

### Example 1

100 parts of syndiotactic 1,2-polybutadiene ("RB830"(Trade name) manufactured by JSR Corporation, 1,2-vinyl bond content: 93%, degree of crystallinity: 29%), 2 parts of 2-methyl-1-[4-(methylthio)phenyl]-2-morpholinopropan-1-one ("Irgacure 907" (Trade name) manufactured by Ciba Specialty Chemicals Co., Ltd.), and 1 part of trimethylolpropane tri(meth)acrylate (TMPTA) ("Acryester TMP" (Trade name) manufactured by Mitsubishi Rayon Co., Ltd.) were mixed. The mixture was kneaded using a pressure kneader set at 120 to 140°C to obtain a polymer composition (H-1).

### Examples 2 to 4 and Comparative Examples 1 to 4

Polymer compositions (H-2 to H-4 and R-1 to R-4) were obtained in the same manner as in Example 1, except for changing the composition as shown in Table 1. In Table 1, "TR1600" indicates a trade name of a styrene-butadiene-styrene block copolymer manufactured by JSR Corporation (styrene content: 32%, weight average molecular weight (Mw): 250,000, amount of oil added: 45 phr), and "Irgacure 819" indicates a trade name of bis(2,4,6-trimethylbenzoyl)-phenylphosphine oxide manufactured by Ciba Specialty Chemicals Co., Ltd.

**TABLE 1**

| Composition (part) | | Example 1 (H-1) | Example 2 (H-2) | Example 3 (H-3) | Example 4 (H-4) | Comparative Example 1 (R-1) | Comparative Example 2 (R-2) | Comparative Example 3 (R-3) | Comparative Example 4 (R-4) |
|---|---|---|---|---|---|---|---|---|---|
| Component (A) | RB830^{*1} | 100 | 100 | 30 | 30 | 100 | 30 | 100 | 30 |
| Component (B) | TR1600^{*2} | | | 70 | 70 | | 70 | | 70 |
| Component (C) | lrgacure 907^{*3} | 2 | | 2 | | | | 2 | 2 |
| | Irgacure 819^{*4} | | 2 | | 2 | | | | |
| Component (D) | TMPTA^{*5} | 1 | 1 | 1 | 1 | | | | |

| | | | | | | | | | |
|---|---|---|---|---|---|---|---|---|---|
| *¹: Syndiotactic 1,2-polybutadiene (Trade name, manufactured by JSR Corporation) *²: Styrene-butadiene-styrene block copolymer (Trade name, manufactured by JSR Corporation) *³: 2-Methyl-1-[4-(methylthio)phenyl]-2-morpholinopropan-1-one (Trade name, manufactured by Ciba Specialty Chemicals Co., Ltd.) *⁴: Bis(2,4,6-trimethylbenzoyl)-phenylphosphine oxide (Trade name, manufactured by Ciba Specialty Chemicals Co., Ltd.) *⁵: Trimethylolpropane tri(meth)acrylate (manufactured by Mitsubishi Rayon Co., Ltd.) | | | | | | | | | |

### Example 5

The polymer composition (H-1) was molded using a press machine set at 150°C to form a sheet having a thickness of 2.0 mm. UV rays with a wavelength of 200 to 450 nm were applied to the resulting sheet so that the cumulative UV irradiation dose was 1000 mJ/cm² to obtain a sheet-shaped resin molded article. UV rays were applied using a UV irradiation system "Eye Grandage ECS301G1"(Trade name) maanufactured by Eye Graphics Co., Ltd.. The resulting resin molded article had a hardness (durometer A) of 94, a 100% stress of 8.2 MPa, a breaking strength of 13.6 MPa, and an elongation at break of 390%. The wear volume of the UV irradiation surface determined by the DIN wear test was 220 cc.

### Examples 6 to 8 and Comparative Examples 5 to 10

A sheet-shaped resin molded article was obtained in the same manner as in Example 2, except for using the polymer composition shown in Table 2, and changing the cumulative UV irradiation dose as shown in Table 2 (UV rays were not applied in Comparative Examples 5 to 8). The property values of the resulting resin molded article are shown in Table 2.

**TABLE 2**

| | Example 5 | Example 6 | Example 7 | Example 8 | Comparative Example 5 | Comparative Example 6 | Comparative Example 7 | Comparative Example 8 | Comparative Example 9 | Comparative Example 10 |
|---|---|---|---|---|---|---|---|---|---|---|
| Type of polymer composition | H-1 | H-2 | H-3 | H-4 | R-1 | R-2 | H-1 | H-4 | R-3 | R-4 |
| Cumulative UV irradiation dose (J/cm²) | 1 | 1 | 1 | 1 | No Irradiation | No Irradiation | No Irradiation | No Irradiation | 1 | 1 |
| Properties | | | | | | | | | | |
| Hardness (durometer A) | 94 | 94 | 75 | 75 | 95 | 75 | 94 | 71 | 95 | 75 |
| 100% stress (MPa) | 8.2 | 8.5 | 2.4 | 2.9 | 7.2 | 2.3 | 6.9 | 2.2 | 7.5 | 2.2 |
| Breaking strength (MPa) | 13.6 | 12.9 | 12.7 | 9.9 | 13.4 | 12.6 | 12.1 | 11.6 | 12.8 | 12.5 |
| Elongation at break (%) | 390 | 370 | 760 | 560 | 570 | 780 | 560 | 770 | 520 | 770 |
| DIN wear test (wear volume (cc)) | 220 | 210 | 170 | 150 | 310 | 240 | 310 | 240 | 290 | 240 |

As shown in Table 2, the resin molded articles of Examples 5 to 8 had excellent wear resistance while maintaining sufficient flexibility and strength as compared with the resin molded articles of Comparative Examples 5 to 10.

### Example 9

(1) A kneader adjusted to 120°C was charged with 100 parts of syndiotactic 1,2-polybutadiene ("RB810" (Trade name) manufactured by JSR Corporation, 1,2-vinyl bond content: 90%, degree of crystallinity: 18%), 20 parts of paraffinic extender oil ("Diana Process Oil PW90" (Trade name) manufactured by Idemitsu Kosan Co., Ltd.), 20 parts of anhydrous silica particles ("Aerosil R972"(Trade name) manufactured by Nippon Aerosil Co., Ltd., average primary particle diameter: 0.017 µm), 1 part of bis(2,4,6-trimethylbenzoyl)-phenylphosphine oxide (manufactured by Ciba Specialty Chemicals Co., Ltd.), and 0.5 parts of trimethylolpropane tri(meth)acrylate (manufactured by Mitsubishi Rayon Co., Ltd.). The mixture was kneaded for 15 minutes to obtain a laser processing composition. The resulting laser processing composition was molded using a press machine set at 150°C to form a sheet having a thickness of 2.0 mm. UV rays were applied to the resulting sheet using a UV irradiation system "Eye Grandage ECS301G1" (Trade name) manufactured by Eye Graphics Co., Ltd. to obtain a laser processing sheet. UV rays were applied to the laser processing target surface.

(2) A laser processing machine ("LaserPro"(Trade name) manufactured by Great Computer Corporation) provided with a closed carbon dioxide laser oscillator (manufactured by Synrad, Inc. (U.S.A.), output: 25 W) was used (speed 30 (%), power 95(%), and resolution 1000 (dpi)). The laser processing sheet obtained in (1) was subjected to laser processing to obtain a flexographic printing plate (Example 9). A flaming ignition during processing, the presence or absence of a sticky processed surface, an odor (sensory evaluation), and engraving accuracy were evaluated. A flaming ignition during processing, the presence or absence of a sticky processed surface, and an odor were evaluated according to the following criteria. The engraving accuracy was determined by observing the processed surface using a surface observation device (manufactured by Keyence Corporation). The evaluation results are shown in Table 3.

Flaming ignition:
Good: A flaming ignition did not occur or occurred to only a small extent.
Bad: A flaming ignition occurred to a large extent.

Odor:
Good: An odor occurred to no or only a small extent.
Bad: An odor occurred to a large extent.

Stickiness:
Good: Stickiness occurred to no or only a small extent.
Poor: Stickiness occurred to some extent.
Bad: Stickiness occurred to a large extent.

Engraving accuracy:
Good: An engraved line with a width of 0.1 mm was observed using a microscope.
Bad: An engraved line with a width of 0.1 mm was not observed using a microscope.

### Examples 10 and 11

Laser processing sheets (Examples 10 and 11) were obtained in the same manner as in Example 9, except for changing the composition as shown in Table 3. The resulting laser processing sheets (Examples 10 and 11) were evaluated and measured in the same manner as in Example 9. The results are shown in Table 3.

### Comparative Examples 11 to 13

Laser processing sheets (Comparative Examples 11 to 13) were obtained using the composition shown in Table 3 without irradiating with UV rays. The resulting laser processing sheets (Comparative Examples 11 to 13) were evaluated and measured in the same manner as in Example 9. The results are shown in Table 3.

**TABLE 3**

| | | Example 9 | Example 10 | Example 11 | Comparative Example 11 | Comparative Example 12 | Comparative Example 13 |
|---|---|---|---|---|---|---|---|
| Composition (parts) | | | | | | | |
| Component (A) | RB810^{*1} | 100 | 30 | 60 | 100 | 30 | 60 |
| Component (B) | TR2827^{*2} | | 70 | | | 70 | |
| Component (B) | SIS5200P^{*3} | | | 40 | | | 40 |
| Component (E) | Diana Process Oil PW-90^{*4} | 20 | 40 | 25 | 20 | 40 | 25 |
| Component (F) | Aerosil R972^{*5} | 20 | 20 | 20 | 20 | 20 | 20 |
| Component (C) | Irgacure 819^{*6} | 1 | 1 | 1 | | | |
| Component (D) | TMPTA^{*7} | 0.5 | 0.5 | 0.5 | | | |
| UV irradiation dose (mJ/cm²) | | 2000 | 2000 | 2000 | - | - | - |
| Hardness (durometer A) | | 83 | 58 | 53 | 80 | 52 | 48 |
| Evaluation of laser processing (speed 30%) | | | | | | | |
| Flaming ignition | | Good | Good | Good | Bad | Bad | Bad |
| Odor | | Good | Good | Good | Good | Good | Good |
| Stickiness | | Good | Good | Good | Bad | Bad | Bad |
| Engraving accuracy | | Good | Good | Good | Bad | Bad | Bad |

| | | | | | | | |
|---|---|---|---|---|---|---|---|
| *¹: Syndiotactic 1,2-polybutadiene (Trade name, manufactured by JSR Corporation) *²: Styrene-butadiene-styrene block copolymer (Trade name, manufactured by JSR Corporation) *³: Styrene-isoprene-styrene block copolymer (Trade name, manufactured by JSR Corporation) *⁴: Paraffinic extender oil (Trade name, manufactured by Idemitsu Kosan Co., Ltd.) *⁵: Anhydrous silica particles (Trade name, manufactured by Nippon Aerosil Co., Ltd.) *⁶: Bis (2, 4, 6-trimethylbenzoyl)-phenylphosphine oxide (Trade name, manufactured by Ciba Specialty Chemicals Co., Ltd.) *⁷: Trimethylolpropane tri(meth)acrylate (manufactured by Mitsubishi Rayon Co., Ltd.) | | | | | | | |

As shown in Table 3, the laser processing sheets of Examples 9 to 11 produced no or only a small amount of odor from the laser-processed surface. The laser processing sheets of Examples 9 to 11 showed a flaming ignition and stickiness to no or only a small extent and excellent engraving accuracy as compared with the laser processing sheets of Comparative Examples 11 to 13.

### INDUSTRIAL APPLICABILITY

The resin molded article according to the present invention exhibits excellent flexibility, strength, and wear resistance, and is suitable as a film, a sheet, a tube, a hose, a sole, a laser processing sheet for producing a flexographic printing plate, and the like.

## Claims

1. An ultraviolet-curable polymer composition comprising:
(A) 5 to 100 parts by mass of syndiotactic 1, 2-polybutadiene having a 1, 2-vinyl bond content of 70% or more and a degree of crystallinity of 5 to 50%,
(B) 0 to 95 parts by mass of a thermoplastic polymer ((A)+(B)=100 parts by mass),
(C) 10 parts by mass or less of a photoinitiator based on 100 parts by mass of the syndiotactic 1, 2-polybutadiene (A) and the thermoplastic polymer (B) in total,
(D) 10 parts by mass or less of a polyfunctional acrylate based on 100 parts by mass of the syndiotactic 1, 2-polybutadiene (A) and the thermoplastic polymer (B) in total,
(E) 0 to 200 parts by mass of an extender oil having a viscosity gravity constant (VGC value) of 0.790 to 0.999 based on 100 parts by mass of the syndiotactic 1, 2-polybutadiene (A) and the thermoplastic polymer (B) in total, and
(F) 0 to 50 parts by mass of silica particles based on 100 parts by mass of the syndiotactic 1, 2-polybutadiene (A) and the thermoplastic polymer (B) in total.

2. The ultraviolet-curable polymer composition according to claim 1, wherein the thermoplastic polymer (B) is at least one thermoplastic polymer selected from the group consisting of a styrene-butadiene copolymer, a hydrogenated styrene-butadiene copolymer, a styrene-isoprene copolymer, a hydrogenated styrene-isoprene copolymer, an ethylene-α-olefin copolymer, polyethylene, polypropylene, an ethylene-vinyl acetate copolymer, an ethylene-alkyl (meth)acrylate copolymer, polybutadiene (excluding the syndiotactic 1,2-polybutadiene (A)), and polyisoprene.

3. The ultraviolet-curable polymer composition according to claim 1 or 2, wherein the photoinitiator (C) is at least one compound selected from the group consisting of benzophenone, benzyl methyl ketal, an α-hydroxyketone, an α-aminoketone, an oxime ester, and an acylphosphine oxide compound.

4. The ultraviolet-curable polymer composition according to any one of claims 1 to 3, wherein the polyfunctional acrylate (D) is at least one compound selected from the group consisting of trimethylolpropane tri(meth)acrylate, trimethylolpropanetrioxyethyl (meth)acrylate, pentaerythritol tri(meth)acrylate, ethylene glycol di(meth)acrylate, and triethylene glycol diacrylate.

5. The ultraviolet-curable polymer composition according to any one of claims 1 to 4, wherein the extender oil (E) is paraffinic extender oil and/or naphthenic extender oil.

6. The ultraviolet-curable polymer composition according to any one of claims 1 to 5, wherein the silica particles (F) are anhydrous particles having an average primary particle diameter of 0.005 µm or more and less than 0.1 µm.

7. A resin molded article obtained by irradiation of UV rays to the ultraviolet-curable polymer composition according to any one of claims 1 to 6.

8. The resin molded article according to claim 7, wherein the surface of the resin molded article has a wear volume determined by a DIN wear test of 300cc or less.

9. The resin molded article according to claim 7 or 8, the resin molded article being a film, a sheet, a tube, a hose, or a sole.

10. A flexographic printing plate formed by laser-engraving a specific printing pattern on a processing target surface of a laser processing sheet having at least one processing target surface, the laser processing sheet being obtained by irradiation of UV rays to a sheet-shaped molded article formed of the ultraviolet-curable polymer composition according to any one of claims 1 to 6.

11. A method for producing a resin molded article comprising irradiation of UV rays to a molded article formed of the ultraviolet-curable polymer composition according to any one of claims 1 to 6 to obtain a resin molded article.

12. The method for producing a resin molded article according to claim 11, wherein a cumulative UV irradiation dose is 100 mJ/cm² or more.
